# NEW EUROPEAN PATENT SPECIFICATION

(11) **EP 2 295 808 B2**
(45) Date of publication and mention of the opposition decision: **20.11.2019**
(45) Mention of the grant of the patent: 08.06.2016
(21) Application number: 10176238.3
(22) Date of filing: 10.09.2010
(51) Int. Cl.: F04D 3/00, F04D 29/54, F03B 3/18

(54) **Fish friendly pump or turbine apparatus**
Fischfreundliche Wasserturbine oder WasserPumpe
turbine ou pompe hydraulique sans danger pour les poissons

(30) Priority: 10.09.2009 NL 2003467
(43) Date of publication of application: 16.03.2011
(73) Proprietor: Nijhuis Pompen BV, 7102 DE Winterswijk (NL)
(72) Inventor: Arnold, Jacob, 7511 GS, Enschede (NL)
(74) Representative: De Vries & Metman

(56) References cited:
- EP-A1- 0 623 750
- EP-A1- 0 623 750
- EP-A2- 1 191 231
- WO-A1-2006/029496
- CH-A- 394 814
- CH-A- 394 814
- CH-A5- 662 864
- DE-A1- 2 010 227
- DE-A1- 10 301 877
- DE-A1- 10 301 877
- DE-A1- 19 510 811
- DE-B- 1 162 195
- DE-C- 475 984
- DE-C- 475 984
- DE-T2- 69 119 765
- FR-A1- 2 321 607
- GB-A- 733 544
- GB-A- 981 989
- GB-A- 983 469
- GB-A- 1 119 756
- GB-A- 1 368 095
- GB-A- 2 012 361
- GB-A- 2 012 361
- JP-A- S6 073 094
- JP-A- 2003 056 481
- NL-A- 7 314 120
- NL-C- 22 734
- NL-C- 22 734
- US-A- 1 971 386
- US-A- 2 991 927
- US-A- 4 193 737
- US-A- 4 648 796
- US-A- 5 221 182
- US-A- 5 221 182
- US-A- 5 385 447
- US-A- 5 385 447
- US-A- 5 562 405
- Offenkundige Vorbenutzung von Tauchmotorpumpen der Serie Amacan P (public prior use 'Tauchmotorpumpen Amacan P')
- ANONYMOUS:: "Baureihenheft 15805/7 für die Tauchmotorpumpen der Serie Amacan P", KSB, 1 April 2008 (2008-04-01), XP055364553,
- ANONYMOUS: "Betriebsanleitung 1580.86 für die Tauchmotorpumpen der Serie Amacan P", KSB, 13 April 2017 (2017-04-13), XP055364546,
- P. SPRINGER ET AL.: "Einsatz von Propellerpumpen in der Umwelttechnik", Pumpentagung Karlsruhe, 1996, pages 1-12, XP055364550,
- S. BAUMGARTEN ET AL.: "Pumpen als Turbinen", KSB, 1 July 2005 (2005-07-01), pages 2-9, XP055364551,
- P. OBERLE ET AL.: "Angepasste Wasserfördertechnologie unter Einsatz von Pumpen im Turbinenbetrieb", WASSERWIRSCHAFT, 1 July 2009 (2009-07-01), pages 58-63, XP055364552,
- Brochure from Fairbanks Nijhuis: FISH-FREUNDLICHE PUMPE
- Brochure Fish-Friendly Pump
- Brochure from FishFlow Innovations: Visveilige axiaalpomp

## Description

The present invention relates to a pump-apparatus comprising a tubular housing in which a rotor is positioned with a drivable screw shaped rotor or impeller.

Axial flow pumps, also known as screw pumps or helical pumps, are often used with polder pumping stations. However, such pumps are harmful for fish.

NL 1034150 proposes to use a pump with an impeller comprising a cylindrical casing sealingly engaging the inner surface of the tubular housing. It has been found that use of an impeller with such a cylindrical casing strongly reduces the pumps efficiency.

EP 733 805 A1 discloses an example of an impeller or screw pump in a tubular housing according to the preamble of claim 1.

It is an object of the invention to provide a fish friendly pump apparatus, which can be used as a pump with an efficiency that is comparable to the usual polder pumps without special provisions for protecting fish

The object of the invention is achieved with a pump according to claim 1.

Surprisingly it has been found that with such an apparatus survival rates exceeding 97 % can be obtained, while a pump effeciciency can be obtained of the same level as with the usual polder pumps without special fish friendly provisions.

The slanting end of the guiding blades can for instance be slanting under an angle smaller than 30° or less.

The entrance angle has material affect on the practical efficiency of the pump and can for instance be below 45°.

In a possible embodiment the slanting edge of the guiding blade can be such that it shows a rounded corner near the point where it approaches the inner wall of the tubular housing. This way, it can be prevented that fishes jam in the narrowing part where the slanting edge and the inner edge of the tubular housing come together.

To give sufficient space to passing fishes, the rotor preferably comrpises at most two blades. The number of guiding blades is preferbly not higher than eight. To create sufficient distance between the blades of the stator and the blades of the rotor, the axial distance between the center point of the rotor hub and the center point of the slanting edge of each guiding blade is larger than half the rotor diameter.

The rotor blades comprise an outer edge which runs with the inner wall of the tubular housing, for instance along a quarter to a third of the circumference or more. In that case the edge can taper to a sharp point at one of its ends, wherein the blade has a side edge between the sharp point and the hub, which is curved in such a way that at least at most points of the side edge the angle between the tangent and the line connecting the point with the rotor axis, is at least 45°. Further, the side edges are always under an angle of at least 30° with a surface perpendicular to the rotational axis.

The hub can for instance be taper, while the stator comprises a substantially cylindrical body, wherein the facing ends of the rotor and the stator have the same diameter. The stator can have a larger diameter than the largest diameter of the tapering hub, wherein the end of the cylindrical stator body directed to the rotor tapers to a diameter corresponding to the diameter of the hub end directed to the stator.

The diameter of the tubular housing around the rotor can then have a smaller diameter than around the stator, wherein the diameter of the tubular housing around the tapering end of the cylindrical stator body changes gradually. This enables to obtain a hydraulically optimized design allowing high pump effeciencies.

The apparatus according to the invention can be used as a pump for pumping surface water, for instance as a polder pump. Such a pump can be designated as an axial flow pump or as a semi-axial flow pump, wherein the average flow direction makes an angle within the range of -45° to 45° relative to the rotational axis of the impeller.

The invention will be elucidated with reference to the figures wherein:
- Figure 1:: shows in perspective view a pump according to the present invention;
- Figure 2:: shows schematically a bottom view of a pump according to the invention;
- Figure 3:: shows schematically a side view of a pump according to the invention.

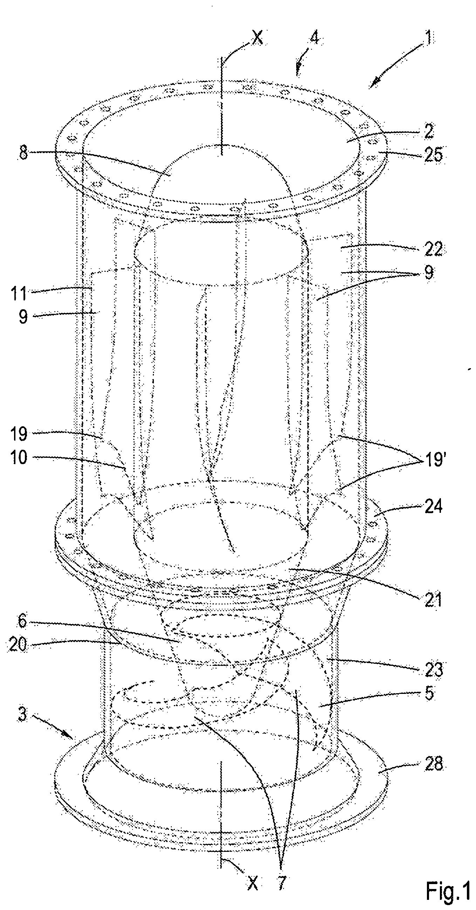

Figure 1 shows a pump 1 with a housing 2 which is transparent in the drawing, the housing having an inlet opening 3, an outlet opening 4 and a drivable screw shape rotor or impeller 5, which can be driven to rotate about a rotational axis X. The rotor 5 comprises a conical hub 6 carrying two blades 7. The rotor 5 is in line with a stator 8, which is connected to the inner wall of the tubular housing 2 by means of six radial guiding blades 9. Each guiding blade 9 has a slanting end 10 directed towards the inlet opening 3 which makes an entrance angle Y with the rotational axis X, and a second end 11 directed to the outlet opening 4, running parallel with the rotational axis X.

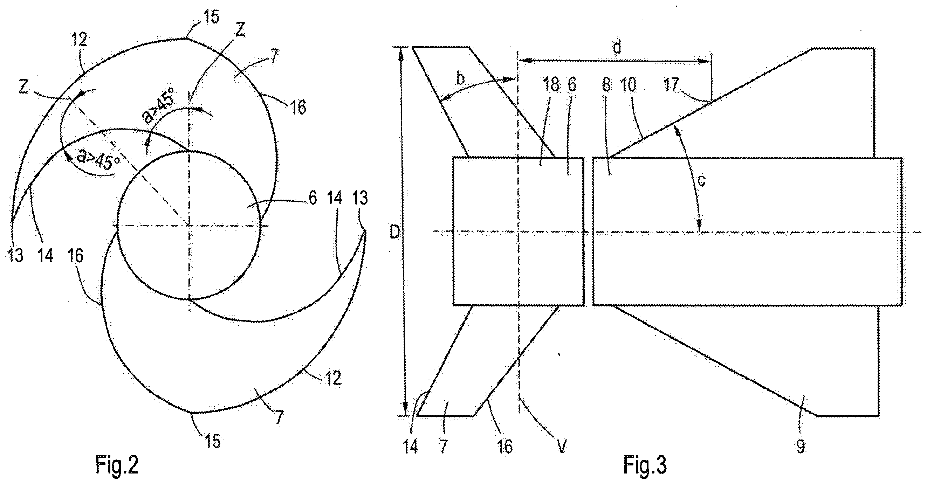

Figure 2 shows a schematic front view of the pump 1. The two blades 7 of the rotor comprise an outer edge 12, which spans about a quarter of the circumference of the inner wall of the tubular housing in the shown embodiment. At the first end of the outer edge 12 the blade 7 shows a sharp point 13. A first side edge 14 runs from the sharp point 13 towards the hub 6. This first side edge 14 is curved in such a way that at each point of this side edge 14, the angle a between the tangent and a radial line between the point in question and the rotor axis X is always 45° or more. The other end of the outer edge 12 of the blade shows a blunt point 15. The blunt point 15 is connected to the hub 6 via a second side edge 16. Over the largest part, the second side edge 16 shows about the same curvature as the first side edge 14. Further the blades 7 of the rotor 5 are shaped in such a way that the angle b between the first side edge 14 and a surface V perpendicular to the rotor axis, is always larger than 30°, as shown schematically in Figure 3.

Figure 3 also shows that the slanting end 10 of the guiding blades 9 is slanting under an angle c which is smaller than 30°, in this specific embodiment about 28°. Further, the axial distance d between the center point 17 of the slanting edge 10 and the center point 18 of the rotor hub 6 is larger than half the diameter D of the rotor 5.

The slanting end 10 of each guiding blade 9 shows a rounded corner 19 near the point where it approaches the inner wall of the tubular housing.

The hub 6 of the rotor 5 is conical. The stator 8 comprises a substantially cylindrical body with a diameter, which is larger than the largest diameter of the hub 6. The end 21 of the cylindrical body of the stator 8 directed to the rotor 5 tapers in such a way that the facing ends of the hub 6 and the stator 8 have a matching diameter.

The tubular housing 2 comprises a first tubular part 22 with a constant diameter around the stator 8, and a second tubular part 23 around the rotor 5 and the tapering end 21 of the stator 8. Both tubular parts 22, 23 are interconnected by means of a flange connection 24. At its top end the first tubular part 22 also comprises a flange 25 for connection to a discharge line.

The lower tubular part 23 comprises a cylindrical part 26 round the rotor 5 and a subsequent conical part 27 around the tapering end 21 of the stator 8. At the end around the inlet opening 3 the tubular part 23 is provided with a flange 28.

## Claims

1. Pump apparatus (1) comprising a tubular housing (2) with an inlet opening (3) and an outlet opening (4), and a driveable screw shaped rotor (5) with a hub (6) carrying at least one blade (7);
wherein the rotor is in line with a stator (8) which is connected to the inner wall of the tubular housing (2) by means of guiding blades (9), wherein the stator is between the rotor (5) and the outlet opening (4)
wherein the guiding blades comprise a slanting end (10) facing the rotor and making an entrance angle Y with the rotational axis X, and a second end (11) directed to the outlet opening (4) which is parallel to the rotational axis,
**characterized in that** the slanting end (10) of the guiding blades (9) slants under an angle with the rotational axis which is smaller than 45°;
wherein each of the rotor blades comprises a side edge (14) which is always under an angle of at least 30° with a surface perpendicular to the rotational axis;
wherein the rotor blades slant towards the inlet in a direction from the hub (6) to an outer edge (12) which follows the inner wall of the tubular housing (2), while the slanting ends (10) of the guiding blades (9) of the stator slant in the opposite direction,
wherein the distance between the centre point (18) of the rotor hub (6) and the centre point (17) of the slanting edge (10) of each blade is larger than half the rotor diameter.

2. Pump apparatus according to claim 1 wherein the slanting end (10) of the guiding blades (9) slants under an angle with the rotational axis which is smaller than 30°.

3. Pump apparatus according to claim 1 or 2 wherein the slanting end (10) of each guiding blade (9) makes a rounded corner (19) near the point where it approaches the inner wall of the tubular housing.

4. Pump apparatus according to claim 1 or 2 wherein the rotor (5) comprises at most two similarly shaped blades (7).

5. Pump apparatus according to any one of the preceding claims wherein each blade (7) of the rotor comprises an outer edge (12) which follows the inner wall of the tubular housing (2), wherein the outer edge ends at one end in a sharp point (13) and wherein the blade comprises a side edge (14) between the sharp point and the hub (6), which side edge is curved in such a way that at least at most points of the side edge (14) the angle between the tangent and the line Z connecting the point with the rotor axis X, is at least 45°.

6. Pump apparatus according to any one of the preceding claims wherein the number of guiding blades (9) is at most eight.

7. Pump apparatus according to any one of the preceding claims wherein the hub (6) tapers and wherein the facing ends of the rotor (5) and the stator (8) have the same diameter.

8. Pump apparatus according to claim 7 wherein the stator end directed to the rotor (5) tapers.

9. Pump apparatus according to claim 8 wherein the diameter of the tubular housing (2) has a smaller diameter around the rotor (5) than around the stator (8), and wherein the diameter of the tubular housing (2) around the tapering end of the stator gradually changes.

## Patentansprüche

1. Pumpenvorrichtung (1), die aufweist:
ein rohrförmiges Gehäuse (2) mit einer Einlassöffnung (3) und einer Auslassöffnung (4) und
ein antreibbares schraubenförmiges Laufrad (5) mit einer Nabe (6), die mindestens eine Schaufel (7) trägt; wobei das Laufrad coaxial mit einem Leitrad (8) angeordnet ist, das mittels Leitschaufeln (9) an der Innenwand des rohrförmigen Gehäuses (2) angebracht ist, wobei das Leitrad zwischen dem Laufrad (5) und der Auslassöffnung (4) angeordnet ist
wobei die Leitschaufeln (jeweils) ein dem Laufrad zugewandtes geneigtes Ende (10), das mit der Rotationsachse X einen Eintrittswinkel Y bildet, und ein zum Auslass (4) gerichtetes zweites Ende (11), das parallel zur Rotationsachse ist, aufweisen,
**dadurch gekennzeichnet, dass** das geneigte Ende (10) jeder Leitschaufel (9) sich bezüglich der Rotationsachse in einem Winkel erstreckt, der kleiner als 45° ist;
jede Laufradschaufel eine Seitenkante (14) aufweist, die bezüglich einer zur Rotationsachse senkrechten Ebene immer in einem Winkel von mindestens 30° ist;
die Laufradschaufeln von der Nabe (6) zu einer Außenkante (12), die sich entlang der Innenwand des rohrförmigen Gehäuses (2) erstreckt, zum Einlass hin in eine Richtung geneigt sind, während die geneigten Enden (10) der Leitschaufeln (9) des Leitrads in die entgegengesetzte Richtung geneigt sind, wobei der Abstand zwischen der Mitte (18) der Laufradnabe (6) und der Mitte (17) der geneigten Kante (10) jeder Schaufel größer ist als der halbe Laufraddurchmesser.

2. Pumpenvorrichtung nach Anspruch 1, wobei das geneigte Ende (10) jeder Leitschaufel (9) sich bezüglich der Rotationsachse in einem Winkel erstreckt, der kleiner als 30° ist.

3. Pumpenvorrichtung nach Anspruch 1 oder 2, wobei das geneigte Ende (10) jeder Leitschaufel (9) in der Nähe des Punkts, wo es sich an die Innenwand des rohrförmigen Gehäuses annähert, eine abgerundete Ecke (19) hat.

4. Pumpenvorrichtung nach Anspruch 1 oder 2, wobei das Laufrad (5) nicht mehr als zwei gleichartig gestaltete Schaufeln (7) aufweist.

5. Pumpenvorrichtung nach einem der vorstehenden Ansprüche, wobei jede Schaufel (7) des Laufrads eine Außenkante (12) aufweist, die sich entlang der Innenwand des rohrförmigen Gehäuses (2) erstreckt, wobei die Außenkante an einem Ende in einer Spitze (13) endet und die Schaufel zwischen der Spitze (13) und der Nabe (6) eine Seitenkante (14) aufweist, die derart gekrümmt ist, dass zumindest an den meisten Punkten der Seitenkante (14) der Winkel zwischen der Tangente und der Linie Z, die den jeweiligen Punkt mit der Laufradachse X verbindet, mindestens 45° ist.

6. Pumpenvorrichtung nach einem der vorstehenden Ansprüche, wobei die Anzahl der Leitschaufeln (9) nicht mehr als acht ist.

7. Pumpenvorrichtung nach einem der vorstehenden Ansprüche, wobei die Nabe (6) eine sich verjüngende Form hat und wobei die sich gegenüberliegenden Enden des Laufrads (5) und des Leitrads (8) denselben Durchmesser haben.

8. Pumpenvorrichtung nach Anspruch 7, wobei das zum Laufrad (5) hin gerichtete Ende des Leitrads eine sich verjüngende Form hat.

9. Pumpenvorrichtung nach Anspruch 8, wobei das rohrförmige Gehäuse (2) in einem Abschnitt, der das Laufrad (5) umgibt, einen kleineren Durchmesser aufweist als in einem Abschnitt, der das Leitrad (8) umgibt, und der Durchmesser des rohrförmigen Gehäuses (2) in einem Abschnitt, der das sich verjüngende Ende des Leitrads umgibt, sich kontinuierlich ändert.

## Revendications

1. Appareil de pompe (1) comprenant un boîtier tubulaire (2) avec une ouverture d'entrée (3) et une ouverture de sortie (4), et un rotor en forme de vis (5) pouvant être entraîné avec un moyeu (6) portant au moins une pale (7) ;
dans lequel le rotor est aligné avec un stator (8) qui est raccordé à la paroi interne du boîtier tubulaire (2) au moyen de pales de guidage (9), dans lequel le stator est entre le rotor (5) et l'ouverture de sortie (4),
dans lequel les pales de guidage comprennent une extrémité inclinée (10) faisant face au rotor et réalisant un angle d'entrée Y avec l'axe de rotation X, et une seconde extrémité (11) dirigée vers l'ouverture de sortie (4) qui est parallèle à l'axe de rotation,
**caractérisé en ce que** l'extrémité inclinée (10) des pales de guidage (9) s'incline sous un angle avec l'axe de rotation qui est inférieur à 45° ;
dans lequel chacune des pales de rotor comprend un bord latéral (14) qui est toujours sous un angle d'au moins 30° avec une surface perpendiculaire à l'axe de rotation ;
dans lequel les pales de rotor s'inclinent vers l'entrée dans une direction allant du moyeu (6) à un bord externe (12) qui suit la paroi interne du boîtier tubulaire (2), alors que les extrémités inclinées (10) des pales de guidage (9) du stator s'inclinent dans la direction opposée,
dans lequel la distance entre le point central (18) du moyeu de rotor (6) et le point central (17) du bord incliné (10) de chaque pale est supérieure à la moitié du diamètre du rotor.

2. Appareil de pompe selon la revendication 1, dans lequel l'extrémité inclinée (10) des pales de guidage (9) s'incline sous un angle avec l'axe de rotation qui est inférieur à 30°.

3. Appareil de pompe selon la revendication 1 ou 2, dans lequel l'extrémité inclinée (10) de chaque pale de guidage (9) fait un coin arrondi (19) à proximité du point où elle s'approche de la paroi interne du boîtier tubulaire.

4. Appareil de pompe selon la revendication 1 ou 2, dans lequel le rotor (5) comprend au maximum deux pales (7) de forme similaire.

5. Appareil de pompe selon l'une quelconque des revendications précédentes, dans lequel chaque pale (7) du rotor comprend un bord externe (12) qui suit la paroi interne du boîtier tubulaire (2), dans lequel le bord externe se termine au niveau d'une extrémité dans une pointe pointue (13) et dans lequel la pale comprend un bord latéral (14) entre la pointe pointue et le moyeu (6), lequel bord latéral est incurvé de sorte qu'au moins dans la majorité, les points du bord latéral (14), l'angle entre la tangente et la ligne Z raccordant le point avec l'axe de rotor X, est d'au moins 45°.

6. Appareil de pompe selon l'une quelconque des revendications précédentes, dans lequel le nombre de pales de guidage (9) est au maximum de huit.

7. Appareil de pompe selon l'une quelconque des revendications précédentes, dans lequel le moyeu (6) se rétrécit progressivement et dans lequel les extrémités en vis-à-vis du rotor (5) et du stator (8) ont le même diamètre.

8. Appareil de pompe selon la revendication 7, dans lequel l'extrémité de stator dirigée vers le rotor (5) se rétrécit progressivement.

9. Appareil de pompe selon la revendication 8, dans lequel le diamètre du boîtier tubulaire (2) a un plus petit diamètre autour du rotor (5) qu'autour du stator (8), et dans lequel le diamètre du boîtier tubulaire (2) autour de l'extrémité progressivement rétrécie du stator change progressivement.
